**Europäisches Patentamt**

**European Patent Office**

**Office européen des brevets**

(19)

(11) Veröffentlichungsnummer: **0 170 886**
**B1**

(12) # EUROPÄISCHE PATENTSCHRIFT

(45) Veröffentlichungstag der Patentschrift:
**08.06.88**

(21) Anmeldenummer: **85108273.5**

(22) Anmeldetag: **04.07.85**

(51) Int. Cl.⁴: **B 29 D 1/00**

(54) **Verbundteil aus Kunststoffträgerteil und Gewindebolzen.**

(30) Priorität: **06.07.84 DE 3425003**

(43) Veröffentlichungstag der Anmeldung:
**12.02.86 Patentblatt 86/7**

(45) Bekanntmachung des Hinweises auf die Patenterteilung:
**08.06.88 Patentblatt 88/23**

(84) Benannte Vertragsstaaten:
**FR GB IT**

(56) Entgegenhaltungen:
**DE-B-1 475 236**
**GB-A-959 867**
**US-A-2 001 290**

(73) Patentinhaber: **Böllhoff & Co, GmbH & Co KG,
Archimedesstrasse 1-4, D-4800 Bielefeld 14 (DE)**

(72) Erfinder: **Hauck, Peter, Traubenstrasse 4, D-4803
Steinhagen (DE)**

(74) Vertreter: **Dipl.- Ing. H. Hauck Dipl.- Phys. W.
Schmitz Dipl.- Ing. E. Graalfs Dipl.- Ing. W.
Wehnert Dr.- Ing. W. Döring, Mozartstrasse 23,
D-8000 München 2 (DE)**

## Beschreibung

Die Erfindung betrifft einen Gewindebolzen für ein Verbundteil nach dem Oberbegriff des Patentanspruchs 1.

Derartige Verbundteile können, insbesondere wenn sie zweischichtig (mit einer äußeren Schaumstoffschicht) ausgebildet sind, im Kraftfahrzeugbereich eingesetzt werden, beispielsweise bei Stoßfängerhörnern, Armlehnen, Zierleisten, etc. Es ist jedoch eine Anwendung in anderen Gebieten der Technik ebenfalls möglich.

Bei der Herstellung eines derartigen Verbundteiles, und zwar sowohl beim Spritzgießen des Trägerteils wie auch beim Verschäumen der ggf. vorgesehenen Schaumstoffschicht, wird der Gewindebolzen in eine Bohrung der Herstellungsform eingesteckt, um den Gewindeabschnitt vom gespritzten Kunststoff bzw. Schaumstoff freizuhalten. Hierbei besteht die Gefahr, daß etwas flüssiger Kunststoff bzw. Schaumstoff in den Gewindebereich fließt.

In der DE-A-1 086 042 dient der Ring aus elastischem Kunststoff dazu, diese Gefahr zu verhindern. Bei dem vorbekannten Metallteil ist der Kunststoffring als Abschnitt eines elastischen Schlauches ausgebildet, der auf das Metallteil aufgezogen wird, um ein Haften dieses Ringes am Metallteil zu erreichen. Hierbei ist der Außendurchmesser des elatischen Schlauches größer als der Bohrungsdurchmesser der Form, um einen Dichtungsdruck entstehen zu lassen. Wird hierbei der Kunststoffring zu stark überdimensioniert, so besteht die Gefahr, daß der Kunststoffring beim Einsetzen in die Preßformbohrung verschoben oder verquetscht wird. Ist dagegen der Kunststoffring nur schwach überdimensioniert, so besteht aufgrund der unvermeidlichen Fertigungstoleranzen die Gefahr, daß die Dichtwirkung unbefriedigend ist.

Aus der DE-A-1 046 866 ist ein Gewindebolzen für ein Verbundteil etwas anderer Gattung bekannt, bei dem ein Kunststoffring in Form einer Dichtungsscheibe auf der Trennfuge zwischen der Bohrung der Herstellungsform und einem Metallteil aufliegt. Bei dieser Anordnung der Dichtungsscheibe kann allerdings das Metallteil gerade dort, wo es aus dem Kunststoff vorsteht, nicht vom Kunststoff umgeben werden.

Der Erfindung liegt die Aufgabe zugrunde, einen zum Stand der Technik gehörenden Gewindebolzen für ein Verbundteil wie im Oberbegriff des Patentanspruchs 1 beschrieben so weiterzubilden, daß die Gefahr einer Beschädigung oder eines Verschiebens des Kunststoffringes beim Einsetzen in die Preßformbohrung verringert wird, ohne daß darunter die Dichtwirkung leidet.

Diese Aufgabe wird durch die im Patentanspruch 1 gekennzeichnete Erfindung gelöst.

Durch Anordnen des Kunststoffringes in einer Ringnut des Gewindebolzens wird ein sicherer Sitz am Gewindebolzen erreicht. Der Kunststoffring kann daher beim Einsetzen des Gewindebolzens in die Bohrung der Herstellungsform abgezogen oder zusammengequetscht werden. Da ferner die Dichtwirkung nicht durch den gesamten Kunststoffring, sondern primär durch am Kunststoffring vorgesehene Dichtlippe erfolgt, läßt sich der Kunststoffring bequem in die Bohrung der Herstellungsform einfügen; dennoch ist eine ausreichende Dichtwirkung sichergestellt. Vorteilhaft ist, daß der Kunststoffring am fertigen Verbundteil nicht störend in Erscheinung tritt. Er läßt sich in einfache Weise in die Ringnut des Gewindebolzens einspritzen.

Besonders vorteilhaft ist, daß die Dichtlippe ihre Dichtfunktion sowohl beim Aufspritzen des leicht flüssigen Kunststoffs wie auch beim Aufbringen einer ggf. vorgesehenen Schaumstoffschicht ausübt. In beiden Fällen verhindert die Dichtlippe, daß der leicht fließende Kunststoff bzw. Schaumstoff in den Gewindebereich eindringt.

Vorteilhafte Ausgestaltungen der Erfindung sind in den Unteransprüchen angegeben.

Anhand der Zeichnung werden Ausführungsbeispiele der Erfindung erläutert. Es zeigt:

Fig. 1     einen Querschnitt durch ein erfindungsgemäß ausgebildetes Verbundteil;

Fig. 2     eine perspektivische Darstellung des Verbundteils nach Fig. 1 in verkleinertem Maßstabe;

Fig. 3     einen Querschnitt durch eine Herstellungsform für das Verbundteil der Fign. 1, 2;

Fig. 4     einen der Fig. 1 entsprechenden Querschnitt durch eine andere Ausführungsform eines Verbundteiles.

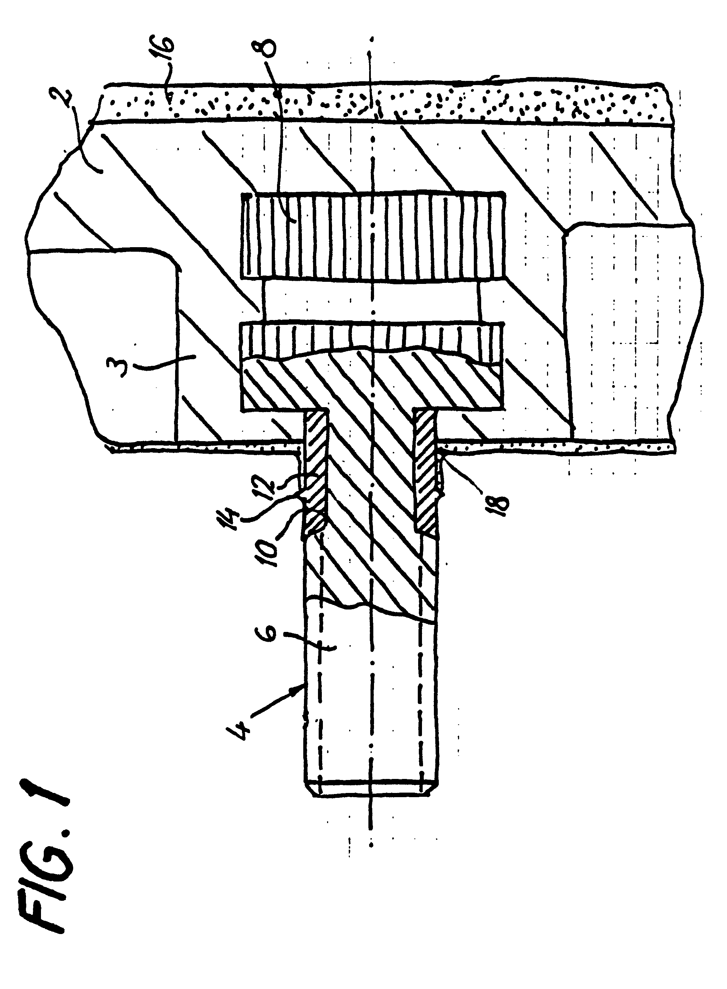

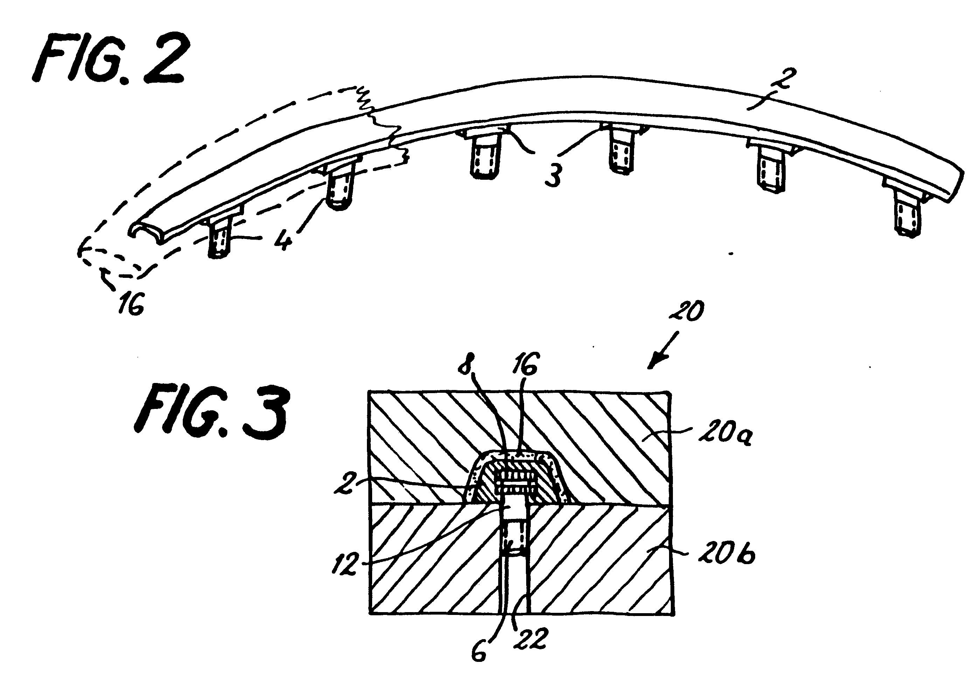

Das in den Figuren 1, 2 gezeigte Verbundteil weist ein Trägerteil mit einer aus gespritztem Kunststoff bestehenden Schicht 2 und mehrere darin eingebettete Gewindebolzen 4 auf. Die Kunststoffschicht 2 ist als Leiste von ungefähr U-förmigem Querschnitt ausgebildet und in regelmäßigen Abständen mit angeformten Ansätzen 3 versehen. Während der Gewindeabschnitt 6 jedes Gewindebolzens 4 aus dem Trägerteil vorsteht, ist der Kopfabschnitt 8 jedes Gewindebolzens 4 in jeweils einem Ansatz 3 des Trägerteils eingebettet. Zur besseren Verankerung ist der Kopfabschnitt 8 mit einer mittleren Ringnut sowie auf seiner Außenseite mit einer Riffelung versehen.

Jeder Gewindebolzen 4 besitzt in dem Bereich, in dem er die Oberfläche des Trägerteils durchdringt, eine eingedrehte Ringnut 10, in der ein Ring 12 aus Kunststoff angeordnet ist. Der Kunststoffring 12 ist mit einer nach außen vorstehenden Dichtlippe 14 versehen, deren Zweck weiter unten beschrieben wird.

Wie in Figur 1 gezeigt und 2 durch gestrichelte Linien angedeutet, ist die Kunststoffschicht 2 von einer Schicht 16 aus Schaumstoff umgeben. Der Schaumstoff kann beispielsweise ein Polyurethanschaumstoff sein, während der Kunststoff sowohl der Schicht 2 wie auch des Ringes 12 vorzugsweise ein Thermoplast ist. Der Gewindebolzen 4 besteht in üblicher Weise aus einem Metall.

Zur Herstellung des beschriebenen Verbundteiles werden zunächst die Ringnuten 10 in die Gewindebolzen 4 eingedreht, worauf die Gewindebolzen 4 durch Spritzgießen mit den Kunststoffringen 12 versehen werden. Anschließend wird die Schicht 2 durch Spritzgießen hergestellt, und hierbei werden die Gewindebolzen 4 in die Ansätze 3 des Trägerteiles eingeformt. Zuletzt wird die Schicht 2 im Schaumgießverfahren mit der Schicht 16 aus Schaumstoff umgeben.

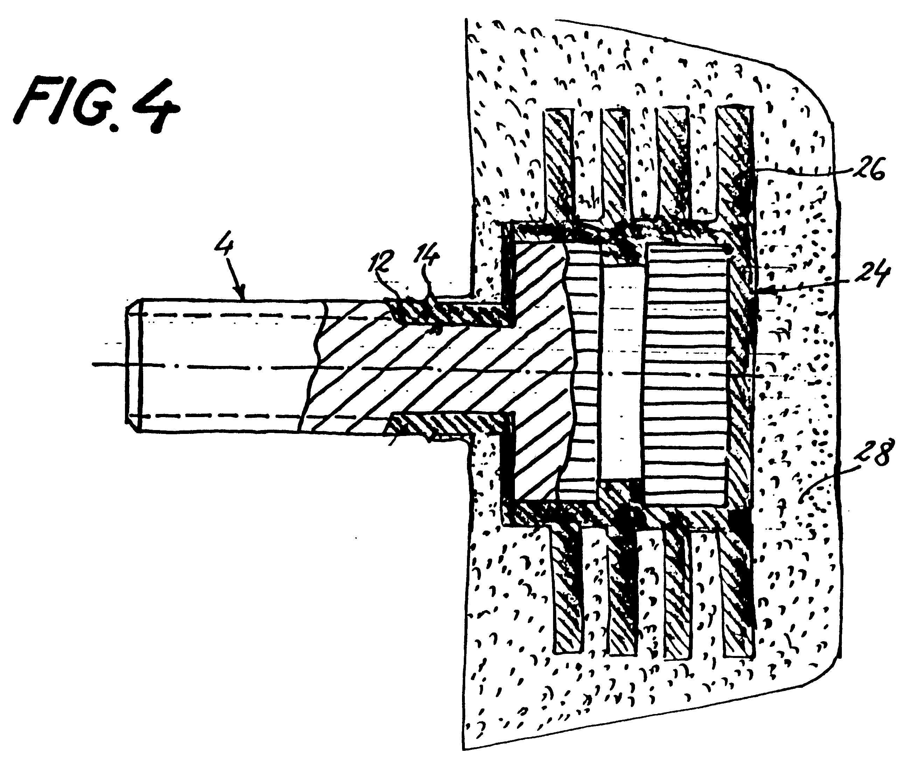

Wie in Figur 3 gezeigt, ist eine aus Oberteil 20a und Unterteil 20b bestehende Schaumform 20 mit Bohrungen 22 versehen, in die die Gewindeabschnitte 6 der Gewindebolzen 4 beim Verschäumen eingesteckt sind. Die Dichtlippe 14 hat gegenüber der Bohrung 22 Übermaß, so daß die Dichtlippe 14 beim Einstecken des Gewindeabschnittes 6 in die Bohrung 22 verquetscht wird.

Auf diese Weise bildet der Kunststoffring 12 mit seiner Dichtlippe 14 eine Abdichtung gegenüber dem Formhohlraum der Schaumform 20 und verhindert somit ein Ausfließen des dünnflüssigen Schaumstoffes in den Bereich der Gewindeabschnitte 6. Wie in Figur 1 schematisch angedeutet, bildet somit die Dichtlippe 14 für die sich beim Verschäumen bildende Schwimmhaut 18 eine nicht zu überwindende Sperre.

Der Kunststoffring 12 mit seiner Dichtlippe 14 bildet eine Abdichtung nicht nur beim Herstellen der Schaumstoffschicht 16, sondern auch beim Spritzgießen der Kunststoffschicht 2, und zwar im Prinzip in der gleichen Weise wie in Figur 3 dargestellt. So wird auch beim Spritzgießen der Gewindeabschnitt 6 in eine Bohrung der Spritzgießform eingesteckt, wobei die Dichtlippe 14 gegenüber der Bohrung ebenfalls Übermaß hat.

Ein weiterer Vorteil des Kunststoffringes 12 besteht darin, daß er im fertigmontierten Zustand, wenn er beispielsweise durch ein Loch in einen Blech gesteckt wird, einen Korrosionsschutz bietet. Gegebenenfalls wirkt er auch geräusch- und schwingungsdämpfend.

Bei dem in den Figuren 1, 2 gezeigten Ausführungsbeispiel ist das Trägerteil, wie erwähnt, mit mehreren Gewindebolzen 4 versehen. Bei dem Ausführungsbeispiel nach Figur 4 dagegen ist das dort gezeigte Trägerteil als Einzelteil mit mehreren axial beabstandeten und radial vorstehenden Rippen 26 ausgebildet. Der Gewindebolzen 4 hat die gleiche Ausbildung wie bei dem Ausführungsbeispiel der Figuren 1, 2, während die Form der Schaumstoffschicht 28 an die Form des Trägerteils angepaßt ist.

Die Herstellung des in Figur 4 gezeigten Verbundteiles erfolgt im Prinzip in der gleichen Weise wie bei dem Ausführungsbeispiel der Figuren 1, 2, wobei auch in diesem Fall der Kunststoffring 12 mit seiner Dichtlippe 14 eine Abdichtfunktion sowohl beim Spritzgießen der Kunststoffschicht 26 wie auch beim Herstellen der Schaumstoffschicht 28 ausübt.

Wie erwähnt, besteht die Kunststoffschicht des Trägerteils und der Kunststoffring aus dem gleichen Material. Insbesondere bei dem Ausführungsbeispiel der Figur 1 können jedoch diese beiden Teile auch aus verschiedenartigem Kunststoff bestehen.

**Patentansprüche**

1. Gewindebolzen (4) für einen Verbundteil, insbesondere für Kraftfahrzeuge, aus einem ein- oder mehrschichtigem Trägerteil (2; 24) aus Kunststoff und einem oder mehreren Gewindebolzen (4), welcher mit seinem Kopfabschnitt (8) in dem Trägerteil (2; 24) eingebettet ist, mit seinem Gewindeabschnitt (6) aus dem Trägerteil (2; 24) vorsteht und in dem Bereich, in dem er die Außenfläche des Trägerteils (2; 24) durchdringt, mit einem Ring (12) aus elastischem Kunststoff umgeben ist, der bezüglich einer den Gewindebolzen (4) aufnehmenden Bohrung (22) einer Herstellungsform (20) überdimensioniert ist, um beim Aufspritzen des Trägerteils (2; 24) ein Fließen des flüssigen Kunststoffs in den Bereich des Gewindeabschnitts (6) zu verhindern, und der bei der Entformung am fertigen Verbundteil verbleibt, dadurch gekennzeichnet, daß der Kunststoffring (12) in einer Ringnut (10) des Gewindebolzens (4) angeordnet und mit einer bezüglich der Bohrung (22) der Herstellungsform (20) überdimensionierten Dichtlippe (14) versehen ist.

2. Gewindebolzen nach Anspruch 1, dadurch gekennzeichnet, daß der Kunststoffring (12) aus dem gleichen Kunststoff wie das Trägerteil (2; 24) besteht.

3. Gewindebolzen nach einem der vorhergehenden Ansprüche, dadurch gekennzeichnet, daß der Kunststoff ein Thermoplast ist.

**Claims**

1. A threaded bolt (4) for a composite element, in particular for automotive vehicles, comprising a single-layer or multi-layer plastic supporting member (2; 24) and one or a plurality of threaded bolts (4) embedded with its head portion (8) in the supporting member (2; 24) and projecting with its threaded portion (6) from the supporting member (2; 24) and surrounded in its area extending through the outer surface of the supporting member (2; 24) by an elastic plastic ring (12) which is overdimensioned with respect to a bore (22) of a mould (20) receiving the threaded bolt (4) so as to prevent flowing of the liquid plastic into the area of the threaded portion (6) upon injection-moulding of the supporting member (2; 24) and which remains on the finished composite element upon removal from the mould, characterized in that the plastic ring (12) is disposed in an annular groove (10) of the threaded bolt (4) and provided with a sealing lip (14) overdimensioned with respect to the bore (22) of the mould (20).

2. The threaded bolt as in claim 1, characterized in that the plastic ring (12) is comprised of the same plastic as the supporting member (2; 24).

3. The threaded bolt as in any of the preceding claims, characterized in that the plastic is a thermoplastic.

## Revendications

1. Goujon fileté (4) pour une pièce composite destinée notamment à des véhicules à moteur, et comprenant un élément support (2, 24) en matière plastique à une ou plusieurs couches et portant un ou plusieurs goujons filetés (4) dont la tête (8) est noyée dans la partie porteuse (2, 24) et dont la section filetée (6) fait saillie sur ledit élément support (2, 24), cette section filetée étant entourée d'un anneau (12) de matière synthétique élastique dans la région où elle traverse la surface extérieure de l'élément support, cet anneau étant surdimensionné par rapport à un trou (22) d'un moule d'obtention (20) qui reçoit le goujon fileté (4), afin d'empêcher la matière plastique liquide de s'écouler vers la section filetée (6) lors du moulage par injection de l'élément support (2, 24), cet anneau restant sur l'élément support terminé lors du démoulage, caractérisé en ce que l'anneau de matière plastique (12) est placé dans une gorge (10) du goujon fileté (4) et est prévu avec un bourrelet d'étanchéité (14) surdimensionné par rapport au trou (22) du moule d'obtention (20).

2. Goujon selon la revendication 1, caractérisé en ce que l'anneau en matière synthétique (12) est de la même matière que l'élément support (2, 24).

3. Goujon selon la revendication 1 ou 2, caractérisé en ce que la matière plastique est une matière thermoplastique.

# FIG. 1

# FIG. 2

# FIG. 3

0 170 886

FIG. 4